# EUROPÄISCHE PATENTSCHRIFT

(11) **EP 3 012 240 B1**
(45) Veröffentlichungstag und Bekanntmachung des Hinweises auf die Patenterteilung: **04.07.2018**
(21) Anmeldenummer: 15191067.6
(22) Anmeldetag: 22.10.2015
(51) Int. Cl.: C04B 35/80, C04B 35/111, C04B 35/119, C04B 35/185

(54) **GRÜNLING FÜR EINEN OXIDKERAMISCHEN FASERVERBUNDWERKSTOFF, OXIDKERAMISCHER FASERVERBUNDWERKSTOFF SOWIE VERFAHREN UND VORRICHTUNG ZU DEREN JEWEILIGER HERSTELLUNG**
GREEN BODY FOR AN OXIDE-CERAMIC FIBER COMPOSITE MATERIAL, OXIDE CERAMIC FIBER COMPOSITE MATERIAL AND METHOD AND DEVICE FOR THEIR RESPECTIVE PREPARATION
COMPACTAGE VERT POUR MATÉRIAU COMPOSITE EN FIBRES EN CÉRAMIQUE OXYDÉE, MATERIAU COMPOSITE EN FIBRES EN CÉRAMIQUE OXYDÉE ET PROCÉDÉ ET DISPOSITIF DE FABRICATION

(30) Priorität: 22.10.2014 DE 102014115414
(43) Veröffentlichungstag der Anmeldung: 27.04.2016
(73) Patentinhaber: WPX Faserkeramik GmbH, 53842 Troisdorf (DE)
(72) Erfinder: Kunz, Mathias, 72108 Rottenburg (DE); Kanka, Bernhard, 51465 Bergisch Gladbach (DE)
(74) Vertreter: Patentanwälte Bauer Vorberg Kayser

(56) Entgegenhaltungen:
- EP-A1- 1 734 024
- US-A- 4 390 583
- US-A- 5 316 797

## Beschreibung

Gegenstand der vorliegenden Erfindung ist ein Verfahren zur Herstellung eines Grünlings für einen oxidkeramischen Faserverbundwerkstoff. Dabei weist der Faserverbundwerkstoff einen Kern aus einer Mehrzahl von oxidkeramischen Fasern auf. Bei diesen Fasern kann es sich beispielsweise um Multifilamentfasern handeln, die z.B. mittels Spinnen aus einem hochviskosen Sol-Gel, nachfolgendem Trocknen und Brennen gewonnen werden können. Im Kontext der vorliegenden Erfindung wird zur Vereinfachung stets von Multifilamentfasern gesprochen, wobei von dieser Formulierung auch beliebige andere Fasern mit umfasst sein sollen. Dieser Kern ist eingebettet in eine Matrix aus einem gesinterten Metalloxid. Weiterhin ist Gegenstand der vorliegenden Erfindung eine Vorrichtung zur Herstellung eines Grünlings für einen oxidkeramischen Faserverbundwerkstoff, ein Grünling eines vorteilhaften oxidkeramischen Faserverbundwerkstoffs sowie eine Mehrzahl von Produkten aus oxidkeramischen Faserverbundwerkstoffen hergestellt gemäß des erfindungsgemäßen Verfahrens bzw. auf Basis des erfindungsgemäßen Grünlings bzw. Faserverbundwerkstoffs.. Schließlich sind Gegenstand der Erfindung Vorrichtungen zur Ausführung der erfindungsgemäßen Verfahren zur Herstellung eines oxidkeramischen Faserverbundwerkstoffs bzw. eines Grünlings hierzu.

Ein Verfahren zur Herstellung von Hochtemperatur-Faserverbundmaterialien ist beispielsweise aus der DE 198 26 792 A1 bekannt. Das dort offenbarte Verfahren dient zur Herstellung von Faserverbundmaterialien, die einen Kern aus aluminiumoxidreichen Mullitfasern aufweisen, der eingebettet ist in eine Matrix bestehend aus Mullit. Ein entsprechender Faserverbundwerkstoff weist besonders vorteilhafte Eigenschaften auf, wenn seine Porosität im Bereich von 40 bis 60 Volumen % liegt.

Aus der EP 1 734 024 A1 ist ebenfalls ein oxidkeramischer Faserverbundwerkstoff und ein Verfahren zur Herstellung desselben bekannt. Wie in der DE 198 26 792 basiert auch das aus der EP 1 734 024 A1 bekannte Verfahren darauf, dass ein Bündel von oxidkeramischen Endlosfasern mit einem Schlicker infiltriert wird, der ein oxidkeramisches Pulver umfasst. Nachfolgend wird ein Grünling als Formkörper gebildet, der getrocknet und schließlich gesintert wird, wobei sich der oxidkeramische Faserverbundwerkstoff ausbildet.

Auch aus der EP 1 734 023 A1 ist ein gattungsgemäßes Verfahren bekannt. Es wird vorgeschlagen, zur Erzielung besonders vorteilhafter Eigenschaften des hergestellten oxidkeramischen Faserverbundwerkstoffs im Schlicker ein sinteraktives oxidkeramisches Pulver einzusetzen, welches wenigstens zwei voneinander verschiedene Korngrößenfraktionen, die unterschiedliche Maxima in der Korngrößenverteilung aufweisen, zu verwenden.

Dokument US5316797 zeigt die Herstellung von keramischen Matrixkompositen. Die Fasern sind entweder oxydisch oder nicht-oxydisch. Eine Mehrzahl von keramischen Multifilamentfasern ist in der Matrix eingebettet. Die Fasern sind kontinuierlich. Die Matrix ist meistens oxydisch. Die Matrix wird mittels Infiltration mit einem wässrigen Schlicker hergestellt. Die Multifilamentfasern sind unidirektional ausgerichtet. Diese Multifilamentfasern werden vertikal in einer Trocknungskammer getrocknet.

US4390583 erwähnt, dass beschichtete keramische Fasern durch eine Form gezogen werden können, damit ein bestimmter Querschnitt erhalten wird. Aufgabe der vorliegenden Erfindung ist es, einen Grünling zur Herstellung eines oxidkeramischen Faserverbundwerkstoffs mit vorteilhaften Eigenschaften anzugeben sowie ein Verfahren und eine Vorrichtung zu dessen Herstellung. Weiterhin ist Aufgabe der vorliegenden Erfindung, einen oxidkeramischen Faserverbundwerkstoff mit vorteilhaften Eigenschaften anzugeben sowie ein Verfahren und eine Vorrichtung zu dessen Herstellung. Schließlich ist Aufgabe der vorliegenden Erfindung, vorteilhafte Verwendungen eines erfindungsgemäßen oxidkeramischen Faserverbundwerkstoffs anzugeben.

Gelöst wird diese Aufgabe durch Verfahren gemäß den Ansprüchen 1 und 8, einen Grünling für einen oxidkeramischen Faserverbundwerkstoff sowie einen oxidkeramischen Faserverbundwerkstoff gemäß Anspruch 9 und 12, sowie Vorrichtungen gemäß der Ansprüche 13 und 16. Die Unteransprüche betreffen jeweils bevorzugte Ausgestaltungen bzw. Weiterbildungen der vorliegenden Erfindung, deren jeweilige Merkmale im Rahmen des technisch Sinnvollen ggf. auch über die Kategoriegrenzen der verschiedenen Ansprüche hinweg frei miteinander kombinierbar sind,
Bei einem erfindungsgemäßen Verfahren handelt es sich um ein Verfahren zur Herstellung eines Grünlings für einen oxidkeramischen Faserverbundwerkstoff. Dabei umfasst dieser Grünling einen Kern aus einer Mehrzahl von oxidkeramischen Multifilamentfasern. Der Kern ist eingebettet in eine Matrix aus einem sinterfähigen Metalloxid.

Das Verfahren ist insbesondere dazu geeignet, kontinuierlich arbeitend ausgeführt zu werden, was jedoch nicht zwingend erforderlich ist. Ggf. ist es auch möglich, das Verfahren auf Rovings anzuwenden, die gebildet sind aus einer Mehrzahl von oxidkeramischen Multifilamentfasern mit einer Länge von wenigen Metern und darunter. Im Rahmen der vorliegenden Erfindung werden auch solche Rovings als "kontinuierliche Rovings" bezeichnet, da an ihnen aufgrund ihrer Länge zeitgleich auf verschiedenen Abschnitten entlang ihrer Erstreckung mehrere Verfahrensschritte ausgeführt werden können. Es wird jedoch als besonders vorteilhaft angesehen, das erfindungsgemäße Verfahren als kontinuierlich arbeitendes Verfahren auszuführen, d.h. mit Rovings, deren Gesamtlänge deutlich über einigen Metern liegt und ohne weiteres über 10 Metern, im Einzelfall auch über 100 Metern liegen kann. Entsprechend sind die erfindungsgemäßen Vorrichtungen ebenfalls bevorzugt zu einer Ausführung der erfindungsgemäßen Verfahren als kontinuierlich arbeitende Verfahren eingerichtet. Hierauf wird nachfolgend noch genauer eingegangen.

In einem ersten Schritt wird im Rahmen des erfindungsgemäßen Verfahrens ein kontinuierlicher Roving gebildet, indem ein Bündel von endlosen oxidkeramischen Multifilamentfasern ausgebildet wird. Unter "endlos" wird im Rahmen der vorliegenden Erfindung eine Länge verstanden die sehr groß ist im Verhältnis zum Faserdurchmesser. Solche "Endlosfasern" werden typisch konfektioniert durch Aufspulen auf Vorratsrollen, wobei die aufgespulte Länge viele zig bis viele Hundert Meter betragen kann. Ein solches kontinuierliches Bündel aus Endlosfasern wird auch als Roving bezeichnet. Dabei wird das Bündel derart ausgebildet, dass die Multifilamentfasern im Roving unidirektional ausgerichtet sind. Unter unidirektional soll im Zusammenhang mit der vorliegenden Erfindung verstanden werden, dass die einzelnen Multifilamentfasern im Roving sich im Wesentlichen entlang der Erstreckungsrichtung des Rovings erstrecken, wobei jedoch auch Situationen mit umfasst werden sollen, in denen die Multifilamentfasern im Roving miteinander verflochten oder versponnen oder zu einem Garn oder Zwirn verarbeitet sind.

Bei der Ausführung des erfindungsgemäßen Verfahrens sind die Multifilamentfasern im zwangsgeführten Roving entlang der Richtung der Zwangsführung ausgerichtet.

Bei dem kontinuierlichen Roving kann es sich insbesondere um einen Direktroving handeln, der durch die parallele Zusammenfassung der Multifilamentfasern zu einem Bündel erhalten werden kann. Grundsätzlich denkbar ist aber auch die Ausbildung eines assemblierten Rovings, der erhalten wird aus einer vorgegebenen Anzahl von spannungsgleichen Direktrovings durch Fachen. Weiterhin kann ein Roving hergestellt werden durch Verzwirnen von verwendeten Multifilamentfasern. Dabei sind grundsätzlich einstufige, aber auch mehrstufige Zwirne möglich.

In einem weiteren Verfahrensschritt wird der so erzeugte kontinuierliche Roving mit einem Schlicker infiltriert, der ein feinkörniges sinterfähiges Metalloxid in einer wässrigen Suspension umfasst. Ggf. kann eine Infiltration aber auch vor oder während der Ausbildung des kontinuierlichen Rovings erfolgen.

In einem weiteren Verfahrensschritt wird der ausgebildete, kontinuierliche Roving einer mechanischen Behandlung unterzogen, so dass eine gewünschte Querschnittsform des Rovings erhalten wird. Dabei kann die mechanische Behandlung des Rovings vor dem Infiltrieren des Rovings durchgeführt werden. Sie kann aber auch an dem bereits infiltrierten Roving durchgeführt werden. Insbesondere kann eine mechanische Behandlung des Rovings vor und nach dem Infiltrieren des Rovings mit dem Schlicker erfolgen.

Aus dem infiltrierten und bezüglich seiner Querschnittsform eingestellten Rovings wird dann ein Grünling in Form eines stangenförmigen Materials ausgebildet, welches insbesondere nachfolgend und besonders bevorzugt nach einem nachfolgend noch im Detail beschriebenen Trocknungsschritts in Abschnitte vordefinierter Länge zerlegt wird.

In einer alternativen Ausgestaltung des erfindungsgemäßen Verfahrens wird ein Grünling als Formkörper ausgebildet, indem ein ggf. auch endloser Abschnitt des infiltrierten und in seiner Querschnittsform eingestellten Rovings in eine gewünschte ein-, zwei oder dreidimensionale Form gebracht wird. Bei einem solchen Formkörper kann es sich insbesondere um zweidimensionale Gelege oder auch um dreidimensionale Strukturen handeln, die beispielsweise durch Aufwickeln des infiltrierten und in eine gewünschte Querschnittsform gebrachten Rovings auf einen dreidimensionalen Wickelkörper erhalten werden können.

Nachfolgend wird der so erhaltene Grünling getrocknet. Dabei schließt dieser Trocknungsschritt vorteilhaft mit einer homogenen Feuchtigkeitsverteilung in der Matrix des Grünlings ab. Unter bestimmten Umständen kann es jedoch ausreichend oder sogar vorteilhaft sein, wenn der Trocknungsschritt mit einer inhomogenen Feuchtigkeitsverteilung in der Matrix des Grünlings abschließt, wie sie beispielsweise durch eine oberflächliche Trocknung des Grünlings erzielt werden kann.

In einer besonders bevorzugten Weiterbildung des Verfahrens, die insbesondere die Herstellung von stangenförmigem Material betrifft, ist der Roving zumindest nach dem Infiltrieren, d.h. während der Einstellung der gewünschten Querschnittsform sowie dem nachfolgenden Trocknungsschritt, in Richtung des lokalen Gravitationsfelds orientiert. Dies hat sich als besonders vorteilhaft erwiesen, da die Matrix des infiltrierten Rovings noch feucht und damit in gewissem Umfang z.B. unter Gravitationseinfluss fließfähig ist. Unter dem Einfluss des Gravitationsfelds kann sich daher die eingestellte Querschnittform des infiltrierten Rovings verändern, was zu einer verminderten Maßhaltigkeit des hergestellten Grünlings führt. Diese nachteiligen Effekte können sicher vermieden werden, wenn der infiltrierte Roving während des Trocknungsvorgangs bis zur Erstarrung der Matrix in Richtung des lokalen Gravitationsfelds orientiert ist.

Dies kann in einer ersten Verfahrensführung dadurch erreicht werden, dass Stücke vom infiltrierten und noch feuchten Roving abgelängt werden, die während des nachfolgenden Trocknungsvorgangs in Richtung des Gravitationsfelds aufgehängt werden, zumindest bis eine Erstarrung der Matrix eingetreten ist. Ggf. kann der Trocknungsvorgang nachfolgend auch unter Aufhebung der vorgenannten Bedingung fortgesetzt werden.

Wird hingegen in einer zweiten Verfahrensführung auch nach dem Infiltrieren des Rovings und der Einstellung von dessen gewünschter Querschnittsform weiterhin mit einer kontinuierlichen Verfahrensführung gearbeitet, so hat es sich als vorteilhaft erwiesen, den infiltrierten Roving kontinuierlich oder abschnittsweise einer Trocknungseinheit zuzuführen, die dazu eingerichtet ist, den Feuchtigkeitsgehalt des infiltrierten und bezüglich seiner Querschnittsform eingestellten Rovings zumindest soweit zu reduzieren, dass eine fließende Verformung des Schlickers (30) im infiltrierten Roving im Wesentlichen nicht mehr möglich ist, d.h. eine Erstarrung der Matrix soweit eingetreten ist, dass auch bei beliebiger Orientierung des infiltrierten Rovings im Raum sich die eingestellte Querschnittsform des infiltrierten Rovings unter dem Einfluss der Gravitation nicht mehr ändert. Die Verweildauer des infiltrierten Rovings in der Trocknungseinheit beträgt daher zumindest diese durch die vorgenannte Bedingung definierte Mindestdauer. Zur Ausbildung des sinterfähigen Grünlings kann aber auch eine längere Verweildauer in der Trocknungseinheit erforderlich sein, beispielsweise um den Feuchtigkeitsgehalt in der bereits im Sinne der vorstehenden Erwägungen erstarrten Matrix noch weiter zu vermindern. Erfindungsgemäß wird zumindest während der vorstehend definierten Mindestdauer die Orientierung des infiltrierten Rovings in der Trocknungseinheit entlang der Richtung des Gravitationsfelds beibehalten.

Mittels des erfindungsgemäßen Verfahrens und unter Verwendung einer nachfolgend noch genauer beschriebenen erfindungsgemäßen Vorrichtung lassen sich Grünlinge herstellen, aus denen vielfältige Produkte aus oxidischer Faserverbundkeramik herstellbar sind. Hierzu müssen die erhaltenen Grünlinge in einem nachgelagerten Verfahrensschritt gesintert werden, wobei sich ein oxidkeramischer Faserverbundwerkstoff ausbildet. Kombiniert man das erfindungsgemäße Verfahren zur Herstellung eines Grünlings mit einem nachgelagerten Sinterschritt, so ergibt sich das erfindungsgemäße Verfahren zur Herstellung eines ebenfalls erfindungsgemäßen oxidkeramischen Faserverbundwerkstoffs. Auch der hier zusätzlich vorgesehene nachgelagerte Verfahrensschritt des Sinterns der erhaltenen Grünlinge kann z.B. Teil eines kontinuierlich arbeitenden Herstellungsverfahrens sein. Der Verfahrensschritt des Sinterns kann jedoch auch individuell auf einzelne Grünlinge angewendet werden, so dass das Herstellungsverfahren in dieser Ausprägung nur bis zum Verfahrensschritt des Trocknens als kontinuierlich anzusehen ist. Es ist in dieser Ausprägung jedoch nicht bis zum letzten Verfahrensschritt des Sinterns als kontinuierlich arbeitend anzusehen. Bevorzugt wird auch der letzte Verfahrensschritt des Sinterns im Rahmen eines kontinuierlich arbeitenden Verfahrens ausgeführt. Entsprechend wird es im Rahmen der vorliegenden Erfindung als vorteilhaft angesehen, wenn auch die Sintervorrichtung einer nachfolgend näher beschriebenen erfindungsgemäßen Vorrichtung zur Herstellung eines oxidkeramischen Faserverbundwerkstoffs ebenfalls für einen kontinuierlichen Betrieb im Rahmen eines kontinuierlichen Herstellungsverfahrens eingerichtet ist.

Beispielhaft für solche Produkte seien hier zugfeste und zugleich biegeelastische Stäbe, Platten und Federn z.B. für Hochtemperaturanwendungen im Bereich 500°C-1300°C genannt. Insbesondere können Stäbe mit einer Länge von 10 mm - 1000 mm und mit runden, rechteckigen oder sonstigen Querschnitten bei von Durchmessern von 1 mm - 50 mm erhalten werden. Weiterhin können Spiralfedern mit Durchmessern zwischen 10 mm - 300 mm erhalten werden.

Die erhaltenen Produkte weisen neben ihrer Hochtemperaturbeständigkeit vorteilhafte Eigenschaften im Zusammenhang mit thermoschockbelasteten Anwendungen auf. So können die erhaltenen Produkte Gradienten von bis zu 1000°C/sec oder 1000°C/cm widerstehen. Auch sind sie unempfindlich bezüglich mechanischer Schockbelastungen sowie Vibrationen und zyklischen Belastungen. Die im Rahmen des erfindungsgemäßen Verfahrens durchgeführte mechanische Behandlung zur Einstellung eines gewünschten Querschnitts des infiltrierten Rovings kann mittels einer Mehrzahl von Verfahren durchgeführt werden, die ggf. auch miteinander kombiniert werden können. Der hergestellte Roving wird durch zumindest eine mechanische Blende hindurchgeführt, die einen Querschnitt aufweist, der im Wesentlichen zum gewünschten Querschnitt des Grünlings führt. Insbesondere kann die Blende einen runden, elliptischen, rechteckigen oder quadratischen Querschnitt aufweisen, wobei hier grundsätzlich beliebige Formgebungen bezüglich des Querschnitts denkbar sind. Dabei kann eine solche mechanische Blende insbesondere einen sich entlang der Bewegungsrichtung des Rovings bis auf einen Minimalquerschnitt verjüngenden Querschnitt aufweisen, z.B. sich entlang der Bewegungsrichtung konisch verjüngen. Insbesondere vorteilhaft ist dabei, wenn der Minimalquerschnitt der mechanischen Blende größer ist als der minimale Querschnitt des hindurchgeführten Rovings bei idealer Raumerfüllung der vom Roving umfassten Multifilamentfasern in der Querschnittsebene des Rovings. Bevorzugt wird hier der Minimalquerschnitt der Blende daran angepasst gewählt, ob der Roving bereits infiltriert wurde. Bei einem bereits infiltrierten Roving sollte der Minimalquerschnitt der mechanischen Blende so gewählt werden, dass beim Hindurchführen durch die mechanische Blende die den Roving umgebenden Matrix nicht zu wesentlichen Teilen wieder abgestreift wird.

Wird eine Mehrzahl von hintereinander angeordneten mechanischen Blenden verwendet, so weisen diese vorteilhaft einen Minimalquerschnitt mit identischer geometrischer Form auf, wobei sich die Abmessungen des Minimalquerschnitts sehr wohl voneinander unterscheiden können.

Durch Vorsehen einer Mehrzahl von in Bewegungsrichtung des infiltrierten Rovings hintereinander angeordneten mechanischen Blenden mit bevorzugt abnehmendem Minimalquerschnitt kann eine kontinuierliche Verdichtung des durch die mechanischen Blenden hindurchgeführten Rovings erzielt werden. Dabei kann der Roving sowohl vor dem Infiltrieren als auch nach dem Infiltrieren durch mechanische Blenden hindurchgeführt werden. In einer besonders bevorzugten Ausgestaltung des erfindungsgemäßen Verfahrens wird der Roving sowohl vor dem Infiltrieren als auch nach dem Infiltrieren durch zumindest jeweils eine mechanische Blende hindurchgeführt. Wird der bereits infiltrierte Roving mechanisch komprimiert, so führt die Kapillarwirkung des Schlickers zu einer recht guten mechanischen Zusammenhaftung des Faserbündels.

Die Querschnittsform des infiltrierten Rovings kann weiterhin beeinflusst bzw. eingestellt werden, indem im Roving vorhandene Spannungen oder Verklebungen der zum Roving zusammengefassten Multifilamentfasern gezielt beeinflusst und vermindert werden. Hierzu kann der Roving beispielsweise über eine oder mehrere drehbar gelagerte Walzen geführt werden, wobei insbesondere eine schraubenförmige Führung um zumindest eine Viertel Umdrehung der Walze vorteilhaft sein kann. In einer besonders bevorzugten Ausgestaltung erfolgt die Führung über zumindest eine halbe, bevorzugt eine volle Umdrehung der Walze und insbesondere über mehr als eine volle Drehung der Walze. Dabei wurde festgestellt, dass sich eine besonders effektive Minimierung der im Roving vorhandenen Spannungen bzw. Verklebungen ergibt, wenn die Walzen zylindrisch oder sogar konkav ausgebildet sind.

Weiterhin können Spannungen und Verklebungen im Roving vermindert sowie eine sowie Homogenisierung / Durchmischung des multiplen Faserbündels erzielt werden, indem der Roving über eine oder mehrere feststehende oder auch drehbar gelagerte Umlenkelemente wie Umlenkrollen geführt wird. Dabei sind die Umlenkelemente so ausgebildet, dass sich die Bewegungsrichtung des Rovings über ein Umlenkelement um einen von 0° verschiedenen Winkel ändert, insbesondere um einen Winkelbetrag im Bereich von 90°. Erfolgen mehrere kaskadierte Umlenkungen, so können die Drehachsen der jeweiligen Umlenkungen einen von 0° verschiedenen Winkel miteinander einschließen, wobei dieser Winkel insbesondere jeweils etwa 90° betragen kann. Zu einer Kaskadierung von drei hintereinander angeordneten Umlenkelementen ist eine Umlenkung in allen drei voneinander unabhängigen Raumrichtungen beispielsweise um jeweils 90° möglich.

Das Führen über drehbar gelagerte Walzen oder über feststehende oder drehbar gelagerte Umlenkelemente des Rovings vermindert Spannungen im Roving oder Verklebungen der im Roving enthaltenen Multifilamentfasern, so dass der aus synchron zwangsgeführten Endlosfasern bestehende Roving tendenziell einen runden Querschnitt annimmt. Auch diese Verfahren dienen daher zu einer Einstellung der Querschnittsform des Rovings.

Vielfältige Anwendungsmöglichkeiten eines unter Verwendung eines erfindungsgemäßen Grünlings hergestellten, ebenfalls erfindungsgemäßen faserverstärkten oxidkeramischen Faserverbundwerkstoffs ergeben sich, wenn bei der Herstellung des Grünlings mittels des erfindungsgemäßen Verfahrens der infiltrierte und bezüglich seiner Querschnittsform eingestellte Roving vor dem Trocknen auf einem Wickelkörper aufgewickelt wird. Hierzu wird der Wickelkörper bevorzugt um zumindest eine Drehachse gedreht. Hierzu ist es vorteilhaft, wenn der Wickelkörper rotationssymmetrisch ist, insbesondere bezüglich der Drehachse, um welche der Wickelkörper während des Aufwickelns des infiltrierten Rovings gedreht wird. Grundsätzlich möglich ist jedoch auch, dass ein Wickelkörper verwendet wird, welcher nicht rotationssymmetrisch ist, sondern beispielsweise quaderförmig mit gerundeten Kanten.

Wird der Wickelkörper während des Wickelns in zumindest einer Raumrichtung bevorzugt quer zur Bewegungsrichtung des filtrierten Rovings translatorisch bewegt, kann eine noch größere Vielzahl von Formkörpern des erzeugten Grünlings realisiert werden.

In vielen Fällen weisen die zur Herstellung verwendeten oxidkeramischen Multifilamentfasern nur eine geringe Elastizität entlang ihrer Faserrichtung auf. Fasst man eine Mehrzahl derartiger Multifilamentfasern zu einem Bündel zusammen und spult ein solches Faserbündel auf einen beispielsweise zylindrischen Wickelkörper auf, so zeigt ein Faserbündel, in welchem die enthaltenen Multifilamentfasern nicht miteinander verflochten oder verzwirnt sind, eine starke Tendenz zur Abflachung. Dies liegt darin begründet, dass außenliegende Multifilamentfasern beim Aufwickeln mit einem größeren Krümmungsradius gekrümmt werden als innenliegende Multifilamentfasern. Die verwendeten Multifilamentfasern können aber häufig praktisch nicht elastisch gedehnt werden. Möchte man vermeiden, dass das auf den Wickelkörper aufgewickelte Faserbündel die vorher aufgeprägte Querschnittsform im Wesentlichen unverändert beibehält, so hat es sich als vorteilhaft herausgestellt, wenn während des Wickelns des Rovings auf den Wickelkörper eine rotatorische Relativbewegung von Wickelkörper und Roving erzeugt wird. Dabei ist diese Relativdrehung von Wickelkörper und Roving so ausgestaltet, dass der Roving bei einer vollen Umschlingung des Wickelkörpers zumindest einmal um 180° um seine Längsachse verdreht wird. Da auf diese Weise jede im Roving enthaltene Multifilamentfaser während des Umlaufs um den Wickelkörper einmal mit dem maximalen und einmal mit dem minimalen Krümmungsradius beaufschlagt wird, ergeben sich identische Spannungen in allen Multifilamentfasern. Dies führt dazu, dass der auf den Wickelkörper aufgespulte Roving im Wesentlichen die ihm vorher aufgeprägte Querschnittsform beibehält.

Eine rotatorische Relativbewegung von Wickelkörper und Roving kann beispielsweise erzeugt werden, indem der erzeugte Roving in sich verdreht wird. Hierzu kann beispielsweise eine geeignete drehbare Lagerung der in der Regel auf Vorratsspulen aufgespulten einzelnen Multifilamentfasern um einen gemeinsamen Drehpunkt verwendet werden, durch den alle Multifilamentfasern des Rovings hindurchgeführt werden

In einer besonders bevorzugten Ausgestaltung des erfindungsgemäßen Verfahrens wird hingegen der Wickelkörper während des Aufwickelns nicht nur um seine Drehachse gedreht. Vielmehr wird der Wickelkörper zusätzlich kontrolliert um eine weitere Rotationsachse gedreht, welche einen von 0° verschiedenen Winkel mit der Drehachse des Wickelkörpers einschließt, so dass der Wickelkörper seinerseits eine Art Nutationsbewegung um diese Rotationsachse ausführt. Wird dem Wickelkörper eine geeignete Nutationsbewegung aufgeprägt, so kann der auf den Wickelkörper aufgespulte Roving kontrolliert dergestalt verdrillt werden, dass durch das Wickeln verursachte Spannungsunterschiede in den einzelnen Multifilamentfasern gerade ausgeglichen werden.

Mittels des erfindungsgemäßen Verfahrens erhaltene oxidkeramischen Faserverbundwerkstoffe weisen besonders vorteilhafte mechanische, chemische und thermische Eigenschaften auf, wenn die verwendeten oxidkeramischen Multifilamentfasern einen Anteil von Al₂O₃ aufweisen, der höher ist als 70% bezogen auf das Fasergewicht und bevorzugt zumindest 80% und besonders bevorzugt über 99% beträgt. Auch mullitische Fasern können vorteilhaft im Rahmen der vorliegenden Erfindung eingesetzt werden. Als besonders vorteilhaft hat sich die Verwendung von oxidkeramischen Multifilamentfasern des Herstellers 3M erwiesen, die unter den Markennamen Nextel™ 312 (Hauptbestandteile: Al₂O₃, Boroxid, SiO₂), 440 (Hauptbestandteil: Aluminiumsillikat), 550 (Hauptbestandteile: Gamma-Aluminiumoxid, SiO₂) 610 und 720 vertrieben werden. Hierzu wird auf das *Ceramic Textiles Technical Notebook* verwiesen, welches von der Firma 3M unter dem Link http://solutions.3mdeutschland.de/wps/portal/3M/de_DE/EU-EAMD/Home/OurProducts/NextelCeramicTextiles/ zum Download angeboten wird. Die bevorzugt zu verwendende Faser Nextel 610 weist einen Gewichtsanteil von Al₂O₃ von über 99% auf, die ebenfalls bevorzugt zu verwendende mullitische Faser Nextel 720 enthält etwa 85-Gew.-% Al₂O₃ und 15 Gew.-% SiO₂. Auch die im wesentlichen Al₂O₃ umfassende Faser, die unter der Marke Cerafib 99 Korund vertrieben wird, hat sich im Rahmen der vorliegenden Erfindung bewährt. Bei den mullitischen Fasern sind weiterhin die kommerziell erhältlichen Produkte zu nennen, die unter den Marken Cerafib 75 Mullit sowie Nitivy ALF vertrieben werden. Schließlich lassen sich auch auf SiC basierende Fasern vorteilhaft im Rahmen der vorliegenden Erfindung verwenden.

Zur Herstellung des Schlickers wird bevorzugt ein feinkörniges sinterfähiges Metalloxid verwendet, welches einen hohen Gewichtsanteil von Al₂O₃ umfasst. Hier hat sich als besonders vorteilhaft die Verwendung von feinstgemahlenem Aluminiumoxid erwiesen, welches vorteilhaft einen Gewichtsanteil Al₂O₃ von über 90%, besonders bevorzugt über 95%, insbesondere über 99% aufweist. Weiterhin beträgt der Anteil von α-Al₂O₃ vorteilhaft über 90%, besonders bevorzugt zumindest 95% oder darüber.

Vorteilhaft weist das feinstgemahlene Aluminiumoxid eine monomodale Korngrößenverteilung auf, die charakterisiert ist durch die Werte d₁₀=0,1 bis 0,4 Mikrometer, d₅₀ = 0,5 bis 0,8 Mikrometer und d₉₀ = 1,5 bis 3 Mikrometer. Die Korngrößenverteilung weist ein Maximum zischen 0,1 und 0,4 Mikrometern auf.

Grundsätzlich lassen sich für die Matrix des Faserverbundwerkstoffs im Rahmen der vorliegenden Erfindung weiterhin vorteilhaft Al₂O₃ mit einer Zirkonoxid-Dotierung oder auch Zirkonoxid selbst verwenden. Auch mullitische Matrices sind möglich je nach spezifischer Anforderung ggf. vorteilhaft.

Wie sich aus vorstehender, nicht abschließend zu verstehender Aufzählung sowohl der Zusammensetzung der Fasern als auch der Matrix ergibt, ist in Einzelfällen auch die Verwendung von nicht-oxidischen Werkstoffen wie SiC für Faser und/oder Matrix vorteilhaft. Auch diese Faserverbundwerkstoffe werden im Rahmen der vorliegenden Erfindung zur Vereinfachung als "oxidkeramisch" bezeichnet. Grundsätzlich umfasst im Rahmen der vorliegenden Erfindung jedoch bevorzugt zumindest die Faser oder die Matrix einen oxidischen Werkstoff, besonders bevorzugt sowohl die Faser als auch die Matrix.

Der im Rahmen des erfindungsgemäßen Verfahrens einzusetzende Schlicker wird hergestellt, indem unter Zusatz von Wasser aus dem verwendeten feinkörnigen sinterfähigem Metalloxid eine Suspension hergestellt wird. Dabei liegt der Gewichtsanteil des Metalloxids in der Suspension typisch zwischen 20 und 90%. Bevorzugt liegt der Gewichtsanteil des Metalloxids in der Suspension über 75% und besonders bevorzugt über 78%. Weiterhin kann dem Schlicker ein wasserlösliches bzw. wasserbasiertes organisches Verflüssigungsmittel zur Einstellung der Viskosität beigegeben werden. Bewährt hat sich die Verwendung von Verflüssigungsmitteln, deren Wirkung darauf beruht, dass funktionelle Gruppen im Verflüssigungsmittel mit Oberflächenladungen des feinkörnigen sinterfähigem Metalloxids wechselwirken. Die hieraus resultierende Umhüllung der Metalloxidpartikel bewirkt eine Viskositätsabnahme im Schlicker. Besonders bevorzugt ist das Verflüssigungsmittel nichtschäumend. Weiterhin hat sich die Verwendung von Verflüssigungsmitteln bewährt, die alkalifrei sind. Vorteilhaft wird das Verflüssigungsmittel dem Schlicker in flüssiger Phase zugesetzt.

Besonders bewährt hat sich die Verwendung von Verflüssigungsmitteln, die Carbonsäure umfassen. Bei der Verwendung eines carbonsäurehaltigen wässrigen Verflüssigungsmittels hat es sich als besonders vorteilhaft ergeben, wenn der Anteil des Verflüssigungsmittels im Schlicker bezogen auf den Feststoffgehalt des Schlickers in der zubereiteten Suspension zwischen 1,5 Gew.-% beträgt, bevorzugt größer ist als 2 Gew.-% und besonders bevorzugt zwischen 2 und 3 Gew.-% beträgt.

Zur Trocknung des infiltrierten Rovings z.B. in der vorstehend beschriebenen Trocknungseinheit zur Ausbildung des Grünlings ist es möglich, diesen unter Umgebungsbedingungen trocknen zu lassen. Es hat sich jedoch als vorteilhaft erwiesen, wenn der infiltrierte Roving zur Trocknung mit einer elektromagnetischen Strahlung beaufschlagt wird. So ist es beispielsweise möglich, eine tiefenwirksame Trocknung des infiltrierten Rovings herbeizuführen, indem der infiltrierte Roving mit Mikrowellenstrahlung beaufschlagt wird, deren Frequenz so eingestellt wird, dass das in der Matrix des infiltrierten Rovings enthaltene Wasser effektiv erhitzt wird. Auf diese Weise kann sehr rasch eine effektive Trocknung des infiltrierten Rovings bewirkt werden, die insbesondere zu einem weitgehend homogenen Konzentrationsprofil von Wasser im Grünling führt.

In einem alternativen Verfahren wird der infiltrierte Roving zur Trocknung einer elektromagnetischen Strahlung ausgesetzt, deren Eindringtiefe gering ist im Verhältnis im Durchmesser des infiltrierten Rovings. Hierbei kann es sich insbesondere um Infrarotstrahlung handeln.

In beiden alternativen oder auch ergänzenden Verfahrensführungen ist es möglich, eine so weit gehende Trocknung der Matrix zu erzielen, dass diese erstarrt, so dass sich der Querschnitt des infiltrierten Roving z.B. unter Gravitationseinfluss oder unter dem Einfluss am infiltrierten Roving angreifender mechanischer Haltemittel nicht mehr verändert. Diese Trocknung kann bereits zur Ausbildung eines sinterfähigen Grünlings ausreichen, muss dies aber nicht notwendigerweise. Es ebenfalls möglich, nach Eintritt der Erstarrung einen zweiten Trocknungsschritt auszuführen, in dem insbesondere die Lage des infiltrierten Rovings im Raum gegenüber der für den ersten Trocknungsschritt vorteilhaften Orientierung in Richtung des lokalen Gravitationsfelds verändert ist.

Ein erfindungsgemäßer Grünling für einen oxidkeramischen Faserverbundwerkstoff bzw. ein hieraus durch Sinterung erhaltener oxidkeramischer Faserverbundwerkstoff umfasst einen Kern aus einer Mehrzahl unidirektional ausgerichteter oxidkeramischer Multifilamentfasern. Dieser Kern ist eingebettet in eine Matrix aus einem gesinterten Metalloxid. In einer bevorzugten Weiterbildung weisen die oxidkeramischen Multifilamentfasern einen Anteil von Al₂O₃ auf, der bezogen auf das Fasergewicht höher ist als 70%, bevorzugt zumindest 80% und besonders bevorzugt über 99% Al₂O₃ beträgt. Der zu 100 Gew.-% noch fehlende Anteil kann insbesondere aus SiO₂ bestehen.

In einer weiteren bevorzugten Ausgestaltung umfasst das Metalloxid der Matrix ebenfalls Al₂O₃. Besondere Vorteile ergeben sich, wenn der Gewichtsanteil Al₂O₃ in der Matrix größer ist als 90%, bevorzugt größer ist als 95% und insbesondere bevorzugt größer ist als 99%.

Besonders vorteilhafte Eigenschaften des erfindungsgemäß erhältlichen oxidkeramischen Faserverbundwerkstoffs ergeben sich, wenn sowohl die Multifilamentfasern als auch die Matrix einen Anteil von Al₂O₃ aufweisen, wobei die jeweiligen Gewichtsanteile von Al₂O₃ in der Multifilamentfaser bzw. der Matrix jeweils in den vorstehend angegebenen Bereichen liegen.

Besondere Vorteile in Bezug auf Zug- und Bruchfestigkeit des erfindungsgemäß erhältlichen oxidkeramischen Faserverbundwerkstoffs ergeben sich,, wenn der Anteil der Multifilamentfasern im Faserverbundwerkstoff bezogen auf das Gewicht des Faserverbundwerkstoffs mindestens 20% beträgt, bevorzugt größer als 30% und insbesondere bevorzugt mindestens 35% beträgt. Der angegebene Anteil der Multifilamentfaser bezieht sich insbesondere auf die vorstehend angegebenen bevorzugten Ausführungsbeispiele mit Al₂O₃ in der Multifilamentfaser oder in der Matrix oder in beiden, wobei erneut auf die jeweils angegebenen Gewichtsanteile Bezug genommen wird.

Besondere Vorteile bezüglich der Bruchfestigkeit ergeben sich weiterhin, wenn die Porosität der Matrix so eingestellt wird, dass sie zwischen 20 und 60 Vol.-% beträgt, insbesondere zwischen 20 und 40-%. Eine entsprechende Porosität kann unter Anwendung des erfindungsgemäßen Verfahrens erzielt werden, insbesondere wenn die Matrix Al₂O₃ im angegebenen Gewichtsbereich umfasst.

Besondere Vorteile bezüglich der Bruchfestigkeit des erfindungsgemäß erhältlichen oxidkeramischen Faserverbundwerkstoffs ergeben sich insbesondere dann, wenn die Korngrößenverteilung des Metalloxids in der Matrix des Faserverbundwerkstoffs monomodal oder bimodal ist. Als insbesondere vorteilhaft hat es sich erwiesen, wenn die Korngrößenverteilung des Metalloxids im Faserverbundwerkstoff zumindest ein Maximum aufweist, welches vorteilhaft zwischen 100 und 400 Nanometern liegt.

Weiterhin können besonders vorteilhafte Eigenschaften des erfindungsgemäß erhältlichen oxidkeramischen Faserverbundwerkstoffs realisiert werden, wenn die Multifilamentfasern entlang ihrer Erstreckungsrichtung verdreht sind. Auf diese Weise kann insbesondere eine erhöhte Biegestabilität realisiert werden. Diese kann ebenfalls erzielt werden, wenn die Multifilamentfasern im Kern des Faserverbundwerkstoffs miteinander verzwirnt oder verflochten sind. Allen diesen vorteilhaften Ausgestaltungen ist gemeinsam, dass ein solcher Faserverbundwerkstoff eine hohe Konstanz bezüglich der Geometrie und den Abmessungen der Querschnittsfläche des Faserverbundwerkstoffs entlang seiner Erstreckungsrichtung aufweist.

Weiterhin erhält man erfindungsgemäß einen oxidkeramischen Faserverbundwerkstoff mit besonders vorteilhaften Eigenschaften, wenn der Faserverbundwerkstoff zu einem spiralförmigen Formkörper geformt ist. Ein solcher Faserverbundwerkstoff kann beispielsweise als Zug- oder Druckfeder mit sehr hoher Temperaturstabilität und hoher Bruchfestigkeit Verwendung finden. Der erfindungsgemäße Faserverbundwerkstoff ist zu einem stabförmigen Formkörper ausgeformt, der entlang seiner Längsachse einen konstanten Querschnitt aufweist. Erstreckt sich ein solcher stabförmiger Formkörper ausschließlich entlang einer Raumrichtung, so können abgelängte Stücke eines solchen Faserverbundwerkstoffs beispielsweise vorteilhaft als Hochtemperaturbeständige Distanzelemente verwendet werden, beispielsweise in elektrischen Heizwicklungen für Oxidationskatalysatoren für Kraftfahrzeuge. Mittels der erfindungsgemäßen Verfahren lassen sich Grünlinge, ggf. aber auch keramische Faserverbundwerkstoffe selbst erhalten, die stabförmige Formkörper mit entlang seiner Längsachse konstantem vorgegebenen Querschnitt ausbilden, wobei die Abmessungen des einzelnen Grünlings oder Faserverbundwerkstoffs quer zu seiner Erstreckungsrichtung auf einer Länge von einem Laufmeter um nicht mehr als 5% vom vorgegebenen Querschnitt abweichen, bevorzugt um nicht mehr als 2% und insbesondere um nicht mehr als 1%. Auch bezüglich der Geradheit des sinterfähigen Grünlings konnten experimentell bereits Genauigkeiten von max. 0,05 Millimetern Abweichung von der idealen Geraden pro Laufmeter bei einem runden Querschnitt mit einem Durchmesser von einigen Millimetern realisiert werden. Diese Werte können sich beim Sintern der Grünlinge verschlechtern, wobei eine Genauigkeit von max. 0,5 Millimetern Abweichung von der idealen Geraden pro Laufmeter bei einem runden Querschnitt mit einem Durchmesser von einigen Millimetern ohne weiteres realisierbar ist.

In einer alternativen Ausgestaltung bildet der stabförmige Formkörper einen Bogenabschnitt aus. Wird ein solcher Bogenabschnitt quer zu seiner Erstreckungsrichtung belastet, ergibt sich eine Federwirkung bei zugleich guter Bruchfestigkeit. Diese kann insbesondere noch erhöht werden, wenn die Multifilamentfasern entlang ihrer Erstreckungsrichtung verdrillt sind, verzwirnt oder miteinander verflochten. Eine Mehrzahl von stabförmigen Formkörpern, die jeweils einen Bogenabschnitt ausbilden, können vorteilhaft mechanisch zu einer Blattfeder zusammengefasst werden, deren mechanische Belastbarkeit insbesondere durch die Zahl der umfassten Formkörper eingestellt werden kann.

In allen hier offenbarten Ausführungsbeispielen für einen oxidkeramischen Faserverbundwerkstoff hat es sich als besonders vorteilhaft erwiesen, wenn zumindest der zugrunde liegende Grünling, aber auch der erfindungsgemäß erhaltene, ebenfalls erfindungsgemäße Faserverbundwerkstoff selbst einen entlang seiner Erstreckungsrichtung im Wesentlichen konstanten, insbesondere runden, elliptischen, quadratischen oder rechteckigen Querschnitt aufweist.

Weiterhin hat es sich herausgestellt, dass ein besonders vorteilhafter oxidkeramischen Faserverbundwerkstoff erhalten werden kann, wenn der Formkörper des zugrunde liegenden Grünlings, bevorzugt aber der erfindungsgemäß erhaltene, ebenfalls erfindungsgemäße Faserverbundwerkstoff entlang seiner Erstreckungsrichtung gekrümmt ist, wobei die Krümmung durch einen Umschlingungswinkel charakterisiert wird, der den Drehwinkel in Bezug auf einen vorgegebenen Drehpunkt charakterisiert und der 360° für einen vollen Umlauf um den Drehpunkt beträgt. Weiterhin ist in dieser Ausgestaltung der Kern des Faserverbundwerkstoffs um einen Verdrillwinkel verdrillt, wobei der Verdrillwinkel gerade so gewählt ist, dass die durch die Krümmung des Formkörpers hervorgerufene Längenvariation zwischen den einzelnen Multifilamentfasern im Kern gerade ausgeglichen wird. In einer solchen Konfiguration treten bei der Herstellung des oxidkeramischen Faserverbundwerkstoffs geringere Scherkräfte im Kern auf, so dass dieser durch die Einbringung der Krümmung weniger verformt wird als ein vergleichbarer Faserverbundwerkstoff, bei dem die Multifilamentfasern im Kern nicht verdrillt sind. Als besonders vorteilhaft hat es sich herausgestellt, wenn der Verdrillwinkel im Wesentlichen dem halben Krümmungswinkel entspricht.

Eine erfindungsgemäße Vorrichtung ist zur Herstellung eines Grünlings für einen oxidkeramischen Faserverbundwerkstoff mit vorteilhaften Eigenschaften vorgesehen. Ein derartiger Faserverbundwerkstoff umfasst einen Kern aus einer Mehrzahl von oxidkeramischen Multifilamentfasern, wobei der Kern eingebettet ist in eine Matrix aus einem gesinterten Metalloxid. Die Vorrichtung umfasst dabei Mittel zum Ausbilden eines kontinuierlichen Rovings durch Bilden eines Bündels von zwangsgeführten, endlosen oxidkeramischen Multifilamentfasern, wobei die Multifilamentfasern im Roving unidirektional in Richtung der Zwangsführung ausgerichtet sind. Weiterhin umfasst die Vorrichtung Mittel zum Infiltrieren des Rovings mit einem Schlicker, der ein feinkörniges sinterfähiges Metalloxid in einer wässrigen Suspension umfasst. Schließlich umfasst die Vorrichtung Mittel zum Einstellen einer gewünschten Querschnittsform des infiltrierten Rovings durch mechanische Behandlung des Rovings. Im Allgemeinen werden diese letztgenannten Mittel auch die mechanischen Abmessungen des infiltrierten Rovings nach der Einstellung der gewünschten Querschnittsform bestimmen.

Diese Mittel zum Einstellen einer gewünschten Querschnittsform des infiltrierten Rovings können insbesondere zumindest eine oder mehrere mechanische Blenden umfassen, durch die der infiltrierte Roving hindurchgeführt wird. Alternativ oder ergänzend können die Mittel eine oder mehrere drehbar gelagerte Walzen umfassen, über die der infiltrierte Roving geführt wird. Insbesondere kann dieses Mittel so ausgestaltet sein, dass der infiltrierte Roving schraubenförmig über eine oder mehrere insbesondere zylindrische oder konkav ausgebildete Walzen geführt wird. Schließlich kann das Mittel zum Einstellen einer gewünschten Querschnittsform eine oder mehrere feststehende oder auch drehbar gelagerte Umlenkelemente umfassen, über die der Roving geführt wird. Diese Umlenkelemente sind dabei so ausgebildet, dass sich die Bewegungsrichtung des infiltrierten Rovings über das Umlenkelement um jeweils einen von Null Grad verschiedenen Winkel ändert. Die Drehachsen der jeweiligen Umlenkungen können dabei einen von Null Grad verschiedenen Winkel miteinander einschließen, der insbesondere jeweils 90° betragen kann. Alle vorgenannten Mittel zum Einstellen einer gewünschten Querschnittsform des infiltrierten Rovings können einzeln oder auch in Kombination miteinander verwendet werden. Sie können einfach oder auch mehrfach vorgesehen sein.

Weiterhin umfasst die erfindungsgemäße Vorrichtung eine Trocknungseinheit, die dazu eingerichtet ist, den Feuchtigkeitsgehalt des infiltrierten und bezüglich seiner Querschnittsform eingestellten Rovings soweit zu reduzieren, dass eine fließende Verformung des Schlickers, d.h. der Matrix des infiltrierten Rovings, im Wesentlichen nicht mehr möglich ist, ohne die eingestellte Querschnittsform des infiltrierten Rovings zu verändern. Diese Trocknungseinheit kann in ihrer einfachsten Form ein Abschnitt der Vorrichtung sein, durch den infiltrierte Roving kontinuierlich oder abschnittweise hindurchgeführt wird und dort unter Umgebungsbedingungen trocknet. Die Trocknungseinheit kann alternativ auch geeignet ausgebildeter Abschnitt der Vorrichtung sein, in dem ein oder mehrere abgelängte Stücke des infiltrierten Rovings unter Umgebungsbedingungen trocknen.

Die erfindungsgemäße Vorrichtung ist vorteilhaft so ausgebildet, dass nach dem Einstellen der gewünschten Querschnittform des infiltrierten Rovings bis zur Erstarrung der Matrix dahingehend, dass diese ausreichend formstabil gegenüber äußeren Einflüssen ist, ein mechanischer Kontakt des infiltrierten Rovings mit die eingestellte Querschnittsform beeinflussenden mechanischen Haltemitteln soweit wie möglich vermieden wird.

In einer weiteren vorteilhaften Ausgestaltung umfasst die erfindungsgemäße Vorrichtung Mittel, die dazu eingerichtet sind, den infiltrierten Roving zumindest in der Trocknungseinheit in Richtung des Gravitationsfelds zu orientieren. Bei einer kontinuierlichen oder abschnittsweisen Zuführung des infiltrierten Rovings zur Trocknungseinheit können dies beispielsweise die Führungselemente der Zwangsführung sein. Diese müssen nicht notwendigerweise in der Trocknungseinheit angeordnet sein.

In einer vorteilhaften Weiterbildung umfasst die erfindungsgemäße Vorrichtung weiterhin ein Mittel zum Bilden eines Grünlings in Form eines ein-, zwei- oder dreidimensionaler Formkörpers. Ein solches Mittel kann in insbesondere als manuelle oder automatisierte Wickelstation ausgebildet sein, die im letzteren Fall beispielsweise computergesteuert anhand eines vorgegebenen Bewegungsprogramms einen Formkörper definierter Geometrie auf einen Wickelkörper aufwickelt.

In einer weiteren vorteilhaften Ausgestaltung umfasst die Trocknungseinheit der erfindungsgemäßen Vorrichtung weiterhin ein Mittel zum Zwangstrocknen des infiltrierten Rovings zur Ausbildung eines sinterfähigen Grünlings, wobei es sich insbesondere um eine Quelle für Infrarot- oder Mikrowellenstrahlung handeln kann.

Die erfindungsgemäße Vorrichtung kann zu einer Vorrichtung zur Herstellung eines oxidkeramischen Faserverbundwerkstoffs weitergebildet werden, indem sie mit einer Sintervorrichtung kombiniert wird, wie sie aus dem Stand der Technik grundsätzlich wohlbekannt ist. Details einer solchen Sintervorrichtung ergeben sich insbesondere aus den nachfolgenden Ausführungsbeispielen. Diese Details beziehen sich insbesondere auf mittels der Sintervorrichtung bereitzustellenden Sinterbedingungen zur Ausbildung von erfindungsgemäßen oxidkeramischen Verbundwerkstoffen mit vorteilhaften mechanischen, thermischen und chemischen Eigenschaften.

Es wird darauf hingewiesen, dass die Merkmale der angegebenen Weiterbildungen und vorteilhaften Ausgestaltungen im Rahmen des technisch Möglichen frei miteinander kombiniert werden können, auch wenn dieses im Text nicht explizit angegeben ist. Dies gilt insbesondere auch über die Grenzen der Anspruchskategorien Vorrichtung und Verfahren hinweg.

Weitere Vorteile und Merkmale des erfindungsgemäßen Verfahrens, des erfindungsgemäßen Faserverbundwerkstoffs sowie der erfindungsgemäßen Vorrichtung zur Herstellung eines Grünlings für einen oxidkeramischen Faserverbundwerkstoff bzw. eines oxidkeramischen Faserverbundwerkstoffs ergeben sich aus den nachfolgenden Ausführungsbeispielen, die anhand der Zeichnung näher erläutert werden. In dieser zeigen:
- Figur 1:: eine schematische Darstellung eines ersten Ausführungsbeispiels einer erfindungsgemäßen Vorrichtung,
- Figur 2:: eine schematische Darstellung eines zweiten Ausführungsbeispiels einer erfindungsgemäßen Vorrichtung,
- Figuren 3 und 4:: Beispiele für mechanische Bearbeitungsstationen für eine Homogenisierung des Rovings vor seiner Infiltration in schematischer Darstellung, und
- Figur 5:: eine alternative Ausgestaltung des Infiltrationsbads der Vorrichtungen gemäß der Figuren 1 und 2.

Zur beispielhaften Ausführung des erfindungsgemäßen Verfahrens wird ein Schlicker 30 zubereitet auf Basis eines hochreinen feinstgemahlenen Aluminiumoxids, wobei der Anteil von Al₂O₃ bezogen auf das Gesamtgewicht des feinstgemahlenen Aluminiumoxids etwa 99,8 Gew.-% beträgt. Der Anteil von α-Al₂O₃ beträgt dabei mindestens 95%. Die Korngrößenverteilung des feinstgemahlenen Aluminiumoxids ist dabei monomodal und lässt sich charakterisieren durch d₁₀ = 0,1 bis 0,4 Mikrometer, d₅₀ = 0,5 bis 0,8 Mikrometer und d₉₀ = 1,5 bis 3 Mikrometer. Die Korngrößenverteilung weist ein Maximum zwischen 0,1 und 0,4 Mikrometern auf.

Der Schlicker 30 wird zubereitet aus dem vorgenannten feinstgemahlenen Aluminiumoxid, Wasser und einem Verflüssiger auf Carbonsäurebasis, wobei der Gewichtsanteil des Aluminiumoxids im Schlicker ca. 80% beträgt. Weiterhin wird der Verflüssiger auf Carbonsäurebasis in wässriger Form in einem Gewichtsanteil von ca. 2 bis 3% zugesetzt. Als verbliebene Komponente wird Wasser zugefügt. Alle drei Komponenten werden intensiv miteinander vermischt, bis man eine hochviskose Suspension erhält. Eine Vermahlung während des Vermischens ist nicht erforderlich.

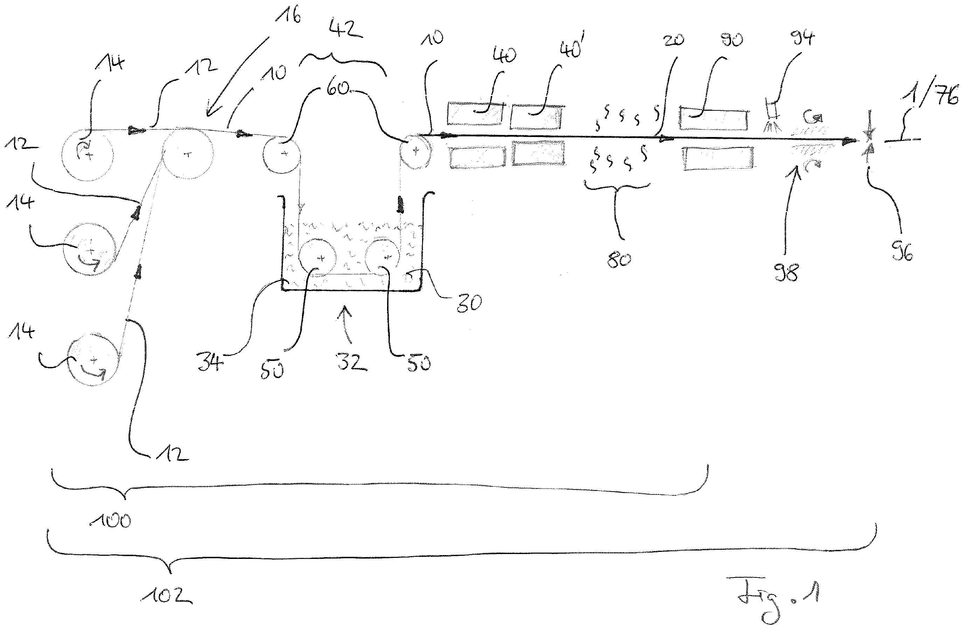

Ein erstes Ausführungsbeispiel einer zur Ausführung des erfindungsgemäßen Verfahrens geeigneten Vorrichtung 100/102 ist schematisch in Figur 1 dargestellt. Eine Mehrzahl von endlosen Multifilamentfasern 12 des Typs Nextel™ 610 (Fasergewicht 3.000 den, 10.000 den oder 20.000 den) wird mittels einer Abrollvorrichtung 18 von Vorratsspulen 14 abgespult und zu einem Roving zusammengeführt.

Die Abwicklung der Multifilamentfasern 12 von einer oder mehreren Vorratsspulen 14 kann passiv erfolgen oder durch einen gesteuerten Antrieb der Vorratsspulen 14. Die Lagerung der Vorratsspulen 14 kann weiterhin so ausgeführt werden, dass eine kontrollierte Bewegung der Vorratsspulen 14 senkrecht zu ihrer jeweiligen Wickelachse möglich ist. Insbesondere kann vorgesehen sein, dass sämtliche Vorratsspulen 14 gemeinschaftlich bewegt werden können, z.B. um eine gemeinsame Drehachse, die insbesondere mit der Bewegungsrichtung des zu einem Roving 10 zusammengeführten Faserbündels zusammenfallen kann, wie dies aus der Fertigung von Tauen oder Seilen bekannt ist. Dies ermöglicht eine kontrollierte Verdrillung des Faserbündels in Längsrichtung, was insbesondere bei der Fertigung von auf einen Wickelkörper 72 aufgewickelten Formkörpern wie Schraubenfedern vorteilhaft sein kann.

Der so erhaltene Roving 10 wird einem Schlickerbad 34 zugeführt, welchem zugleich der vorstehend beschriebene Schlicker 30 in ausreichender Menge zugeführt wird. Indem der Roving 10 durch das Schlickerbad 34 hindurchgeführt wird, wird dieser infiltriert, dergestalt dass sich eine intensive Durchdringung des Rovings 10 mit dem Schlicker 30 ergibt, die sich insbesondere auch auf den Bereich zwischen den Fasern des aus einem Bündel von Multifilamentfasern 12 bestehenden Rovings 10 erstreckt. Zusätzliche Umlenkungen des Rovings 10 im Schlickerbad 34 über Zylinder 50 mit glatter Oberfläche garantieren eine vollständige Infiltration.

Nachfolgend wird der infiltrierte Roving 10 durch eine Mehrzahl von hintereinander folgenden mechanischen Blenden geführt, die jeweils einen runden Querschnitt aufweisen, wobei der Blendenquerschnitt sich entlang der Bewegungsrichtung des Rovings 10 kontinuierlich verjüngt. Der minimale Querschnitt der verwendeten Blenden wird dabei so gewählt, dass er größer ist als der Mindestquerschnitt des Rovings 10 der erhalten wird bei optimaler Raumerfüllung der Multifilamentfasern 12. Die Blenden 40 weisen dabei jeweils eine runde Querschnittsfläche auf.

Nachfolgend wird der infiltrierte und bezüglich der Querschnittsform eingestellte Roving 10 einer Trocknungsstation 80 zugeführt, innerhalb derer der Roving 10 entlang einer definierten Strecke Infrarotstrahlung ausgesetzt wird, die eine zumindest oberflächliche Trocknung des infiltrierten Rovings 10 bewirkt.

Nachfolgend wird der durch die Trocknung erhaltene Grünling 20 weiterhin in einem kontinuierlichen Prozess einer Sintervorrichtung 90 zugeführt, bei der sich beispielsweise um einen Ofen mit mehreren diskreten Temperaturzonen handeln kann. Im genannten Ausführungsbeispiel hat sich es als besonders vorteilhaft erwiesen, wenn der infiltrierte getrocknete Roving bei einer Temperatur von etwa 1.200° C über eine Zeit von ca. 60 Minuten gesintert wird.

An die Sintervorrichtung 90 schließt sich eine Abkühlstation 94 an, in welche der sich in der Sintervorrichtung 90 ausbildende oxidkeramische Faserverbundwerkstoff 1 nach dem Durchlaufen der Sintervorrichtung 90 eintritt und in der eine Abkühlung des erhaltenen Faserverbundwerkstoffs 1 beispielsweise mittels Pressluft bewirkt wird.

Nach Durchlaufen der Abkühlstation 94 wird der nunmehr abgekühlte erhaltene Faserverbundwerkstoff 1 einer Schneidvorrichtung 96 zugeführt, in der Stücke in gewünschter Länge von dem im kontinuierlichen Prozess erhaltenen endlosen Faserverbundwerkstoff 1 abgelängt werden.

Die in Figur 1 dargestellte Vorrichtung 100/102 umfasst weiterhin eine Ziehvorrichtung 98, welche dazu vorgesehen ist, den Roving 10 während des kontinuierlich arbeitenden Verfahrens durch die verschiedenen Stationen der dargestellten Vorrichtung 100/102 hindurch zu transportieren. Diese Ziehvorrichtung 98 stellt damit eine Zwangsführung dar. Sie kann beispielsweise auf Basis eines Exzenterspanners arbeiten, der bei jeder Umdrehung einen definierten Vorschub des zwangsgeführten Rovings 10 bewirkt.

Die mittels der hier dargestellten Vorrichtung 100/102 erhaltenen Abschnitte aus einem oxidkeramischen Faserverbundwerkstoff 1 weisen einen runden Querschnitt auf, der entlang der Längsachse der erhaltenen Werkstoffabschnitte eine sehr gute Konstanz aufweist. Insbesondere können Abschnitte erhalten werden, deren runder Durchmesser entlang ihrer Längsachse um weniger als ± 5% variiert. Die so erhaltenen Abschnitte eignen sich aufgrund ihrer geometrischen Eigenschaften, ihrer sehr guten elektrischen Isolationsfähigkeit sowie ihrer extrem guten Temperaturbeständigkeit hervorragend als elektrisch isolierende, hochhitzebeständige und korrosionsfeste Distanzelemente, die auch in stark korrosiven Umgebungen eingesetzt werden können.

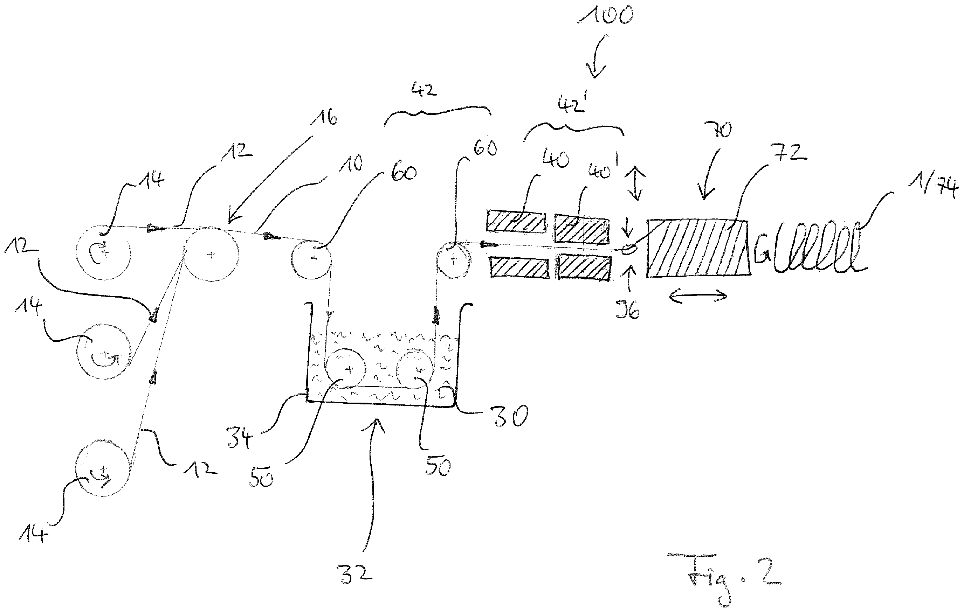

Figur 2 zeigt eine Abwandlung der aus Figur 1 ersichtlichen erfindungsgemäßen Vorrichtung 100/102, die sich in ihrem Aufbau erst nach der Mehrzahl mechanischer Blenden 40 von dem der Vorrichtung 100/102 gemäß Figur 1 entscheidet. Es wird daher auf die betreffende Beschreibung der Vorrichtung 100/102 gemäß Fig. 1 verwiesen.

Nach Durchlaufen der Mehrzahl mechanischer Blenden 40 wird bei der Vorrichtung 100/102 gemäß Figur 2 der infiltrierte und bezüglich seines Querschnitts eingestellte Roving 10 nicht einer Trocknungsstation 80 zugeführt, sondern einer CNC-gesteuerten Wickelstation 70, in welcher der infiltrierte Roving 10 automatisiert auf einen Wickelkörper 72 aufgewickelt wird. Durch Steuerung der Drehbewegung, des Winkels zwischen der Drehachse des Wickelkörpers 72 und der Bewegungsrichtung des zugeführten Rovings 10 sowie einer Translationsbewegung des Wickelkörpers 72 in einer Ebene senkrecht zur Bewegungsrichtung des Rovings 10 können mittels der CNC-gesteuerten Wickelmaschine 70 auch komplexe Formkörper erzeugt werden.

Ist der Formkörper fertiggestellt, so wird dieser von dem kontinuierlichen Roving 10 abgetrennt und weiterhin auf den Wickelkörper 72 aufgewickelt einer Trocknungsstation 80 zugeführt. Ist der so gebildete dreidimensional geformte Grünling 20 ausreichend getrocknet, so dass er eine ausreichende mechanische Stabilität aufweist, kann der Wickelkörper 72 entfernt werden und der so erhaltene dreidimensionale geformte eigenstabile Grünling 20 einer geeigneten Sintervorrichtung 90 zugeführt werden. Bei dieser kann es sich beispielsweise um einen Kammerofen handeln, in dem der Grünling 20 bei einer Temperatur von etwa 1.200° über etwa 1 Stunde gesintert wird.

Nachfolgend wird der erhaltene oxidkeramische Faserverbundwerkstoff 1 der Sintervorrichtung 90 entnommen und kann nach ausreichender Abkühlung, welche beispielsweise wiederum in einer Abkühlstation 94 beschleunigt werden kann, einer weiteren Verarbeitung zugeführt werden.

Die mittels der in Figur 2 dargestellten Vorrichtung 100/102 erhaltenen dreidimensional spiralig geformten Faserverbundwerkstoffe 1 eignen sich insbesondere als hochtemperaturfeste, ausgezeichnet ermüdungsbeständige Keramikfedern, deren besonderer Vorteil darin begründet liegt, dass sie auch bei Temperaturen oberhalb von 500° C und darüber ihre Federwirkung nicht verlieren. Sie eignen sich daher insbesondere für eine Verwendung in der chemischen Prozesstechnik oder in Härtereiverfahren, bei denen Bauteile auch bei hohen Temperaturen unter Verwendung mechanischer Federn mit einer konstanten Haltekraft beaufschlagt werden müssen.

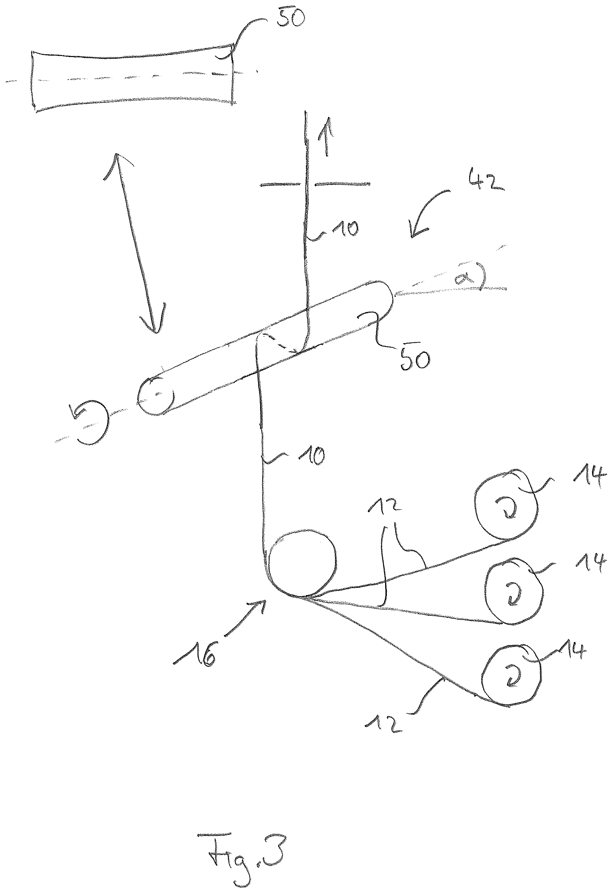

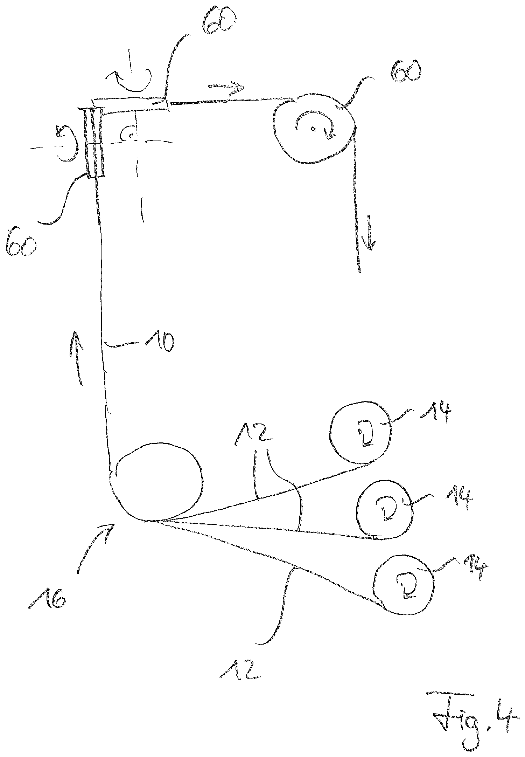

Der Querschnitt des aus mehreren Multifilamentfasern 12 bestehenden Rovings 10 kann weiterhin mittels einer zusätzlichen, in den Figuren 1 und 2 nicht dargestellten mechanischen Bearbeitungsstation 42 beeinflusst werden. Zwei Beispiele hierfür sind in den Figuren 3 und 4 schematisch dargestellt ist. Die gezeigten mechanischen Bearbeitungsstationen 42 sind zu einer Integration in eine Vorrichtung gemäß Fig. 1 oder 2 geeignet. So kann sie beispielsweise in den Bereich zwischen die Mittel 16 zur Zusammenführung der Multifilamentfasern 12 zu einem Roving 10 und der mechanischen Blende 40 eingefügt werden.

Die in den Figuren 3 und 4 dargestellten mechanischen Bearbeitungsstationen 42 dienen insbesondere einer Homogenisierung des Rovings 10 vor seiner Infiltration. In der in Fig. 3 gezeigten Ausführung umfasst diese zusätzliche mechanische Bearbeitungsstation 42 eine drehbar gelagerte Walze 50 mit zylindrischem Querschnitt, deren Außenkontur konkav ist. In der Bearbeitungsstation 42 wird der Roving 10 schraubenförmig über die Walze 50, die passiv oder motorgetrieben sein kann, geführt.

In einer alternativen oder zusätzlichen Ausführung einer zusätzlichen Bearbeitungsstation 42 zur Homogenisierung des Rovings 10 wird dieser sukzessive über drei orthogonal angeordnete Umlenkrollen 60 geführt, die die Bewegungsrichtung des Rovings 10 nacheinander in allen drei Raumrichtungen jeweils um 90° ändern. Eine solche Bearbeitungsstation 42 ist in Fig. 4 beispielhaft gezeigt. Die Oberflächen der Umlenkrollen 60 können auch mit Borsten versehen sein. Anstelle der Umlenkrollen 60 können auch feststehende Ablenkelemente verwendet werden, über die der Roving 10 geführt wird.

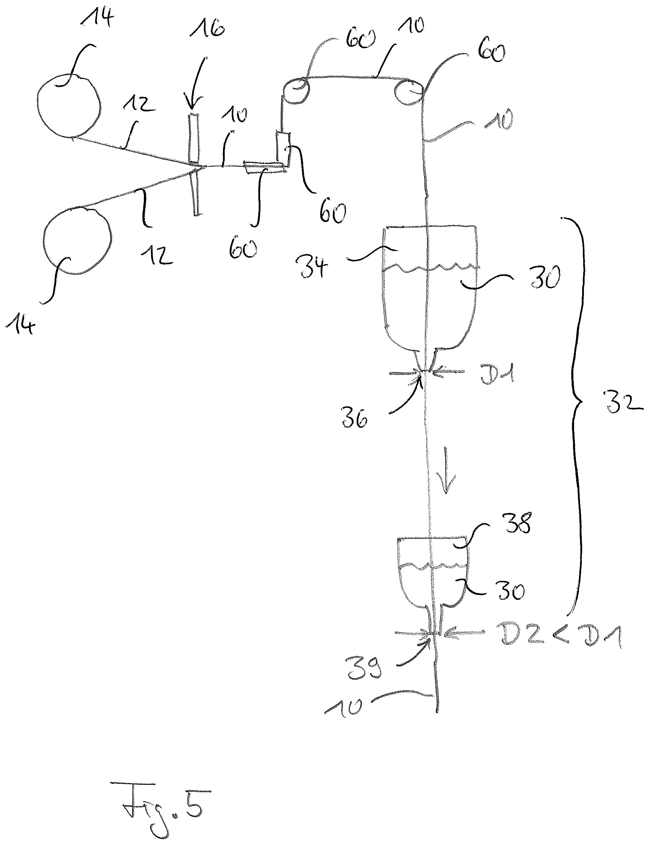

Eine alternative Ausgestaltung eines Schlickerbads 34 ist schließlich in Fig. 5 dargestellt. In dieser Ausführungsform wird der Roving 10 in vertikaler Richtung durch das Schlickerbad 34 hindurchgeführt, um eine eventuelle Verformung des infiltrierten Rovings 10 unter dem Einfluss der Gravitation weitestgehend zu vermeiden. Auch wird der Roving 10 kontinuierlich durch das Schlickerbad 34 hindurchgeführt, dem parallel Schlicker 30 in der erforderlichen Menge zugeführt wird. Die Durchführöffnung 36 des Schlickerbads 34 für den Roving ist dabei in Bewegungsrichtung sich konisch verjüngend ausgeführt. Die Länge der Infiltrationsstrecke im Schlickerbad 34 wird durch den Füllstand des Schlickers 30 bestimmt. Dieser kann durch einen definierten Überlauf eingestellt oder über eine elektronische Füllstandsmessung und Steuerung der Schlickerzufuhr zum Schlickerbad 34 gesteuert werden

In Bewegungsrichtung nachfolgend ist ein Auffangbecken 38 mit einer Durchführöffnung 39 für den infiltrierten Roving 10 angeordnet, deren Innendurchmesser kleiner ist als der Innendurchmesser der Durchführöffnung 36 des Schlickerbads 34. Hierdurch wird ein gewisser Anteil des Schlickers 30 wieder vom infiltrierten Roving 10 abgestreift. Eine Überwachung der abgestreiften Menge kann als Maß für die Infiltration verwendet werden und insbesondere zu einer Steuerung der Infiltrationsstrecke/-zeit im Schlickerbad 34 z.B. durch Steuerung der Vorschubgeschwindigkeit der Zwangsführung des Rovings 10 oder des Füllstands im Schlickerbad 34 herangezogen werden.

### Bezugszeichen

- 1: oxidkeramischer Faserverbundwerkstoff
- 2: Kern
- 4: Matrix
- 10: Roving
- 12: Multifilamentfaser
- 14: Vorratsspule
- 16: Mittel zum Ausbilden eines kontinuierlichen Rovings
- 20: Grünling
- 30: Schlicker
- 32: Mittel zum Infiltrieren eines Rovings mit einem Schlicker
- 34: Schlickerbad
- 36: Durchführöffnung Ø D1
- 38: Auffangbecken
- 39: Durchführöffnung Ø D2
- 40: mechanische Blende
- 42: Mittel zum Einstellen einer gewünschten Querschnittsform eines Rovings
- 50: Walze
- 60: Umlenkelement
- 70: Wickelstation
- 72: Wickelkörper
- 74: spiraliger Formkörper
- 76: stabförmiger Formkörper
- 80: Mittel zum Trocknen eines Grünlings
- 90: Sintervorrichtung
- 94: Abkühlstation
- 96: Schneidvorrichtung
- 98: Ziehvorrichtung
- 100: Vorrichtung zur Herstellung eines Grünlings für einen oxidkeramischen Faserverbundwerkstoff
- 102: Vorrichtung zur Herstellung eines oxidkeramischen Faserverbundwerkstoffs

## Patentansprüche

1. Verfahren zur Herstellung eines Grünlings (20) für einen zugfesten und biegeelastischen Stab (1) aus einem oxidkeramischen Faserverbundwerkstoff, wobei der Grünling (20) einen Kern (2) aus einer Mehrzahl von oxidkeramischen Multifilamentfasern (12) aufweist, wobei der Kern (2) eingebettet ist in eine Matrix (4) aus einem sinterfähigen Metalloxid, mit folgenden Verfahrensschritten
a. Ausbilden eines kontinuierlichen Rovings (10) durch Bilden eines zwangsgeführten Bündels von endlosen oxidkeramischen Multifilamentfasern (12), wobei die Multifilamentfasern (12) im Roving (10) entlang der Richtung der Zwangsführung unidirektional ausgerichtet sind,
b. Infiltrieren des Rovings (10) mit einem Schlicker (32), der ein feinkörniges sinterfähiges Metalloxid in einer wässrigen Suspension umfasst,
c. Einstellen einer gewünschten Querschnittsform des infiltrierten Rovings (10) durch mechanische Behandlung des infiltrierten Rovings (10), indem der infiltrierte Roving (10) durch zumindest eine mechanische Blende (40) hindurchgeführt wird, und
d. Trocknen des infiltrierten Rovings zur Ausbildung eines Grünlings (20), bis der Feuchtigkeitsgehalt des infiltrierten und bezüglich seiner Querschnittsform eingestellten Rovings (10) soweit reduziert ist, dass eine fließende Verformung des Schlickers (32) im infiltrierten Roving (10) im Wesentlichen nicht mehr möglich ist.

2. Verfahren gemäß Anspruch 1, **dadurch gekennzeichnet, dass** der Roving (10) zumindest während der Verfahrensschritte c. und d. in Richtung des Gravitationsfelds orientiert ist.

3. Verfahren gemäß Anspruch 1, **dadurch gekennzeichnet, dass** die mechanische Blende (40) einen sich entlang der Richtung der Zwangsführung des Rovings (10) bis auf einen Minimalquerschnitt verjüngenden Querschnitt aufweist.

4. Verfahren nach Anspruch 3, **dadurch gekennzeichnet, dass** der Minimalquerschnitt größer ist als der minimale Querschnitt des hindurchgeführten Rovings (10) bei idealer Raumerfüllung der umfassten Multifilamentfasern (12) in der Querschnittebene, bevorzugt um 5 bis 25% größer.

5. Verfahren gemäß Anspruch 1, **dadurch gekennzeichnet, dass** eine Mehrzahl in Bewegungsrichtung des Rovings (10) hintereinander angeordneter mechanischer Blenden (40) vorgesehen ist, durch die der infiltrierte Roving (10) hindurchgeführt wird.

6. Verfahren gemäß Anspruch 5, **dadurch gekennzeichnet, dass** die Blenden (40) jeweils einen Minimalquerschnitt aufweisen und die Minimalquerschnitte entlang der Richtung der Zwangsführung des Rovings (10) abnehmen.

7. Verfahren gemäß Anspruch 1, **dadurch gekennzeichnet, dass** der infiltrierte Roving (10) zur Trocknung mit einer elektromagnetischen Strahlung beaufschlagt wird, insbesondere mit Infrarotstrahlung oder Mikrowellenstrahlung.

8. Verfahren zur Herstellung eines zugfesten und biegeelastischen Stabs (1) aus einem oxidkeramischen Faserverbundwerkstoff, wobei der Faserverbundwerkstoff (1) einen Kern (2) aus einer Mehrzahl von oxidkeramischen Multifilamentfasern (12) aufweist, wobei der Kern (2) eingebettet ist in eine Matrix (4) aus einem gesinterten Metalloxid, mit folgenden Verfahrensschritten :
a. Ausbilden eines Grünlings (20) mittels eines kontinuierlichen Verfahrens gemäß Anspruch 1, und
b. Sintern des Grünlings (20).

9. Grünling (20) für einen zugfesten und biegeelastischen Stab aus einem oxidkeramischen Faserverbundwerkstoff (1) mit einem Kern (2) aus einer Mehrzahl von unidirektional ausgerichteten oxidkeramischen Multifilamentfasern (12), der eingebettet ist in eine Matrix (4) aus einem sinterfähigen Metalloxid, wobei der Grünling (20) zu einem stabförmigen Formkörper (76) mit entlang seiner Längsachse konstantem vorgegebenen Querschnitt geformt ist, in dem die Multifilamentfasern entlang der Längsachse des stabförmigen Formkörpers (76) orientiert sind, wobei die Abmessungen des Grünlings (20) quer zu dessen Erstreckungsrichtung auf einer Länge von einem Laufmeter um nicht mehr als 5% vom vorgegebenen Querschnitt abweichen, bevorzugt um nicht mehr als 2% und insbesondere um nicht mehr als 1%.

10. Grünling (20) gemäß Anspruch 9, **dadurch gekennzeichnet, dass** der stabförmige Formkörper (76) sich im Wesentlichen ausschließlich entlang einer Raumrichtung erstreckt.

11. Grünling (20) gemäß Anspruch 9, **dadurch gekennzeichnet, dass** der Grünling (20) einen runden, elliptischen, quadratischen oder rechteckigen Querschnitt aufweist.

12. Zugfester und biegeelastischer Stab (1) aus einem oxidkeramischen Faserverbundwerkstoff bestehend aus einem gesinterten Grünling nach einem der Ansprüche 9 bis 12.

13. Vorrichtung (100) zur Herstellung eines Grünlings (20) für einen zugfesten und biegeelastischen Stab aus einem oxidkeramischen Faserverbundwerkstoff, wobei der Faserverbundwerkstoff (1) einen Kern (2) aus einer Mehrzahl von oxidkeramischen Multifilamentfasern (12) aufweist, wobei der Kern (2) eingebettet ist in eine Matrix (4) aus einem gesinterten Metalloxid, mit folgenden Merkmalen:
a. Mittel (16) zum Ausbilden eines kontinuierlichen Rovings (10) durch Bilden eines Bündels von zwangsgeführten endlosen oxidkeramischen Multifilamentfasern (12), wobei die Multifilamentfasern (12) im Roving (10) unidirektional entlang der Richtung der Zwangsführung ausgerichtet sind,
b. Mittel (32) zum Infiltrieren des Rovings (10) mit einem Schlicker (30), der ein feinkörniges sinterfähiges Metalloxid in einer wässrigen Suspension umfasst,
c. Mittel (42) zum Einstellen einer gewünschten Querschnittsform des Rovings (10) durch mechanische Behandlung des Rovings (10), wobei die Mittel (42) zum Einstellen einer gewünschten Querschnittsform des Rovings (10) zumindest eine mechanische Blende (40) umfassen, durch die der Roving (10) hindurchgeführt wird, und
d. eine Trocknungseinheit, die dazu eingerichtet ist, den Feuchtigkeitsgehalt des infiltrierten und bezüglich seiner Querschnittsform eingestellten Rovings (10) soweit zu reduzieren, dass eine fließende Verformung des Schlickers (30) im infiltrierten Roving (10) im Wesentlichen nicht mehr möglich ist, ohne die eingestellte Querschnittsform des infiltrierten Rovings (10) zu verändern.

14. Vorrichtung (100) gemäß Anspruch 13, **dadurch gekennzeichnet, dass** Mittel vorgesehen sind, die dazu eingerichtet sind, den infiltrierten Roving (10) zumindest in der Trocknungseinheit in Richtung des Gravitationsfelds zu orientieren.

15. Vorrichtung (100) gemäß Anspruch 13, **dadurch gekennzeichnet, dass** die Trocknungseinheit weiterhin Mittel (80) zum Zwangstrocknen des Grünlings (20) umfasst.

16. Vorrichtung (102) zur Herstellung eines zugfesten und biegeelastischen Stabs (1) aus einem oxidkeramischen Faserverbundwerkstoff, **gekennzeichnet durch** eine Vorrichtung (100) gemäß Anspruch 13 sowie eine Sintervorrichtung (90).

## Claims

1. A method for producing a green compact (20) for a flexible bar (1) with high tensile strength consisting of an oxide ceramic fiber composite material, wherein the green compact (20) has a core (2) consisting of a plurality of oxide ceramic multifilament fibers (12), wherein the core (2) is embedded in a matrix (4) consisting of a sinterable metal oxide, comprising the following method steps:
a. forming a continuous roving (10) by forming a positively guided bundle of endless oxide ceramic multifilament fibers (12), wherein the multifilament fibers (12) are unidirectionally oriented in the roving (10) along the direction of the positive guidance,
b. infiltrating the roving (10) with a slurry (32) including a fine-grained sinterable metal oxide in an aqueous suspension,
c. adjusting a desired cross-sectional shape of the infiltrated roving (10) by a mechanical treatment of the infiltrated roving (10) by the infiltrated roving (10) being passed through at least one mechanical orifice (40), and
d. drying the infiltrated roving for forming a green compact (20) until the content of moisture of the infiltrated roving (10), which is adjusted with respect to its cross-sectional shape, is reduced to the extent that a flowing deformation of the slurry (32) in the infiltrated roving (10) is substantially no longer possible.

2. The method according to claim 1, **characterized in that** the roving (10) is oriented in the direction of the gravitational field at least during the method steps c. and d.

3. The method according to claim 1, **characterized in that** the mechanical orifice (40) has a cross section that narrows to a minimum cross section along the direction of the positive guidance of the roving (10).

4. The method according to claim 3, **characterized in that** the minimum cross section is greater than the minimum cross section of the passed-though roving (10) in the case of an ideal filling of space of the enclosed multifilament fibers (12) in the cross-section plane, preferably greater by 5 to 25%.

5. The method according to claim 1, **characterized in that** a plurality of mechanical orifices (40) arranged one behind the other in the direction of movement of the roving (10) is provided, through which the infiltrated roving (10) is passed.

6. The method according to claim 5, **characterized in that** the orifices (40) each have a minimum cross section, and the minimum cross sections decrease along the direction of the positive guidance of the roving (10).

7. The method according to claim 1, **characterized in that** the infiltrated roving (10) is irradiated with an electromagnetic radiation, in particular with infrared radiation or microwave radiation, for drying.

8. A method for producing a flexible bar (1) with high tensile strength consisting of an oxide ceramic fiber composite material, wherein the fiber composite material (1) has a core (2) consisting of a plurality of oxide ceramic multifilament fibers (12), wherein the core (2) is embedded in a matrix (4) consisting of a sintered metal oxide, comprising the following method steps:
a. forming a green compact (20) by means of a continuous method according to claim 1, and
b. sintering of the green compact (20).

9. A green compact (20) for a flexible bar with high tensile strength consisting of an oxide ceramic fiber composite material (1) with a core (2) consisting of a plurality of unidirectionally oriented oxide ceramic multifilament fibers (12) and embedded in a matrix (4) consisting of a sinterable metal oxide, wherein the green compact (20) is formed into a bar-shaped molded body (76) with a predefined cross section that is constant along its longitudinal axis, in which the multifilament fibers are oriented along the longitudinal axis of the bar-shaped molded body (76), wherein the dimensions of the green compact (20) transverse to its extension direction deviate by no more than 5 % from the predefined cross section, preferably by no more than 2 %, and in particular by no more than 1 %, over a length of one running meter.

10. The green compact (20) according to claim 9, **characterized in that** the bar-shaped molded body (76) extends substantially exclusively along one direction in space.

11. The green compact (20) according to claim 9, **characterized in that** the green compact (20) has a round, elliptical, square or rectangular cross section.

12. A flexible bar (1) with high tensile strength of an oxide ceramic fiber composite material, consisting of a sintered green compact according to any one of the claims 9 to 12.

13. A device (100) for producing a green compact (20) for a flexible bar with high tensile strength consisting of an oxide ceramic fiber composite material, wherein the fiber composite material (1) has a core (2) consisting of a plurality of oxide ceramic multifilament fibers (12), wherein the core (2) is embedded in a matrix (4) consisting of a sintered metal oxide, comprising the following features:
a. means (16) for forming a continuous roving (10) by forming a bundle of positively guided endless oxide ceramic multifilament fibers (12), wherein the multifilament fibers (12) are unidirectionally oriented in the roving (10) along the direction of the positive guidance,
b. means (32) for infiltrating the roving (10) with a slurry (30) including a fine-grained sinterable metal oxide in an aqueous suspension,
c. means (42) for adjusting a desired cross-sectional shape of the roving (10) by a mechanical treatment of the infiltrated roving (10), wherein the means (42) for adjusting a desired cross-sectional shape of the roving (10) comprise at least one mechanical orifice (40) through which the roving (10) is passed, and
d. a drying unit configured for reducing the content of moisture of the infiltrated roving (10), which is adjusted with respect to its cross-sectional shape, to the extent that a flowing deformation of the slurry (30) in the infiltrated roving (10) is substantially no longer possible without changing the adjusted cross-sectional shape of the infiltrated roving (10).

14. The device (100) according to claim 13, **characterized in that** means are provided that are configured for orienting the infiltrated roving (10) in the direction of the gravitational field at least in the drying unit.

15. The device (100) according to claim 13, **characterized in that** the drying unit further comprises means (80) for the forced drying of the green compact (20).

16. A device (102) for producing a flexible bar (1) with high tensile strength from an oxide ceramic fiber composite material, **characterized by** a device (100) according to claim 13 and a sintering device (90).

## Revendications

1. Procédé de fabrication d'un compact vert (20) pour une barre (1) résistante à la traction et élastique en flexion faite à partir d'un matériau composite en céramique oxydée renforcé par des fibres, dans lequel ledit compact vert (20) comprend un noyau (2) en une pluralité de fibres multifilamentaires (12) en céramique oxydée, dans lequel ledit noyau (2) est enrobé dans une matrice (4) en un oxyde métallique frittable, comprenant les étapes de procédé suivantes consistant à
a. réaliser un roving continu (10) en formant un faisceau à guidage forcé de fibres multifilamentaires (12) sans fin en céramique oxydée, dans lequel les fibres multifilamentaires (12) dans le roving (10) sont orientées de manière unidirectionnelle suivant la direction du guidage forcé,
b. infiltrer le roving (10) d'une barbotine (32) qui comprend un oxyde métallique frittable à grains fins dans une suspension aqueuse,
c. régler une forme de section souhaitée du roving (10) infiltré par un traitement mécanique du roving (10) infiltré en faisant passer ledit roving (10) infiltré à travers au moins un obturateur mécanique (40), et
d. sécher le roving infiltré pour former un compact vert (20) jusqu'à ce que la teneur en humidité du roving (10) infiltré et réglé quant à sa forme de section soit réduite de telle sorte qu'une déformation fluante de la barbotine (32) à l'intérieur du roving (10) infiltré n'est plus possible pour l'essentiel.

2. Procédé selon la revendication 1, **caractérisé par le fait que**, au moins durant les étapes c. et d. du procédé, le roving (10) est orienté en direction du champ de gravitation.

3. Procédé selon la revendication 1, **caractérisé par le fait que** ledit obturateur mécanique (40) présente une section transversale qui se rétrécit, le long de la direction du guidage forcé du roving (10), jusqu'à une section transversale minimale.

4. Procédé selon la revendication 3, **caractérisé par le fait que** la section transversale minimale est supérieure à la section transversale minimale du roving (10) que l'on fait passer à travers, lorsque la densité relative en %, dans le plan de la section, des fibres multifilamentaires (12) comprises est idéale, de préférence elle est de 5 à 25 % plus grande.

5. Procédé selon la revendication 1, **caractérisé par le fait que** l'on prévoit une pluralité d'obturateurs mécaniques (40) qui sont disposés les uns derrière les autres dans la direction de déplacement du roving (10) et à travers lesquels on fait passer le roving (10) infiltré.

6. Procédé selon la revendication 5, **caractérisé par le fait que** lesdits obturateurs (40) présentent chacun une section transversale minimale et que les sections transversales minimales diminuent suivant la direction du guidage forcé du roving (10).

7. Procédé selon la revendication 1, **caractérisé par le fait que**, pour le sécher, le roving (10) infiltré est exposé à un rayonnement électromagnétique, en particulier à un rayonnement infrarouge ou à un rayonnement micro-ondes.

8. Procédé de fabrication d'une barre (1) résistante à la traction et élastique en flexion faite à partir d'un matériau composite en céramique oxydée renforcé par des fibres, dans lequel ledit matériau composite (1) renforcé par des fibres présente un noyau (2) en une pluralité de fibres multifilamentaires (12) en céramique oxydée, dans lequel ledit noyau (2) est enrobé dans une matrice (4) en un oxyde métallique fritté, comprenant les étapes de procédé suivantes consistant à:
a. réaliser un compact vert (20) au moyen d'un procédé continu selon la revendication 1, et
b. fritter le compact vert (20).

9. Compact vert (20) pour une barre résistante à la traction et élastique en flexion faite à partir d'un matériau composite (1) en céramique oxydée renforcé par des fibres qui comprend un noyau (2) en une pluralité de fibres multifilamentaires (12) en céramique oxydée orientées de façon unidirectionnelle, lequel est enrobé dans une matrice (4) en un oxyde métallique frittable, dans lequel le compact vert (20) est formé en un corps façonné (76) en forme de barre qui a une section transversale prédéterminée constante le long de son axe longitudinal et dans lequel les fibres multifilamentaires sont orientées le long de l'axe longitudinal du corps façonné (76) en forme de barre, dans lequel les dimensions du compact vert (20), transversales à la direction d'extension de celui-ci, sur une longueur d'un mètre courant, ne s'écartent pas de plus de 5 % de la section transversale prédéterminée, de préférence ne s'écartent pas de plus de 2 % et, en particulier, ne s'écartent pas de plus de 1 %.

10. Compact vert (20) selon la revendication 9, **caractérisé par le fait que** le corps façonné (76) en forme de barre s'étend pour l'essentiel exclusivement suivant une direction spatiale.

11. Compact vert (20) selon la revendication 9, **caractérisé par le fait que** le compact vert (20) présente une section transversale ronde, elliptique, carrée ou rectangulaire.

12. Barre (1) résistante à la traction et élastique en flexion faite à partir d'un matériau composite en céramique oxydée renforcé par des fibres, se composant d'un compact vert fritté selon l'une quelconque des revendications 9 à 12.

13. Dispositif (100) de fabrication d'un compact vert (20) pour une barre résistante à la traction et élastique en flexion faite à partir d'un matériau composite en céramique oxydée renforcé par des fibres, dans lequel ledit matériau composite (1) renforcé par des fibres comprend un noyau (2) en une pluralité de fibres multifilamentaires (12) en céramique oxydée, dans lequel ledit noyau (2) est enrobé dans une matrice (4) en un oxyde métallique fritté, comprenant les caractéristiques suivantes:
a. des moyens (16) servant à réaliser un roving continu (10) en formant un faisceau de fibres multifilamentaires (12) sans fin en céramique oxydée à guidage forcé, dans lequel les fibres multifilamentaires (12) dans le roving (10) sont orientées de manière unidirectionnelle suivant la direction du guidage forcé,
b. des moyens (32) servant à infiltrer le roving (10) d'une barbotine (30) qui comprend un oxyde métallique frittable à grains fins dans une suspension aqueuse,
c. des moyens (42) servant à régler une forme de section souhaitée du roving (10) par un traitement mécanique du roving (10), dans lequel les moyens (42) de réglage d'une forme de section souhaitée du roving (10) comprennent au moins un obturateur mécanique (40) à travers lequel on fait passer le roving (10), et
d. une unité de séchage qui est adaptée pour réduire la teneur en humidité du roving (10) infiltré et réglé quant à sa forme de section, de telle sorte qu'une déformation fluante de la barbotine (30) à l'intérieur du roving (10) infiltré ne soit plus possible pour l'essentiel sans modifier la forme de section réglée du roving (10) infiltré.

14. Dispositif (100) selon la revendication 13, **caractérisé par le fait que** des moyens sont prévus qui sont adaptés pour orienter le roving (10) infiltré, au moins dans ladite unité de séchage, en direction du champ de gravitation.

15. Dispositif (100) selon la revendication 13, **caractérisé par le fait que** l'unité de séchage comprend en outre des moyens (80) pour le séchage forcé du compact vert (20).

16. Dispositif (102) de fabrication d'une barre (1) résistante à la traction et élastique en flexion faite à partir d'un matériau composite en céramique oxydée renforcé par des fibres, **caractérisé par** un dispositif (100) selon la revendication 13 ainsi que par un dispositif de frittage (90).
